# FASCICULE DE BREVET EUROPEEN

(11) **EP 1 421 763 B1**
(45) Date de publication et mention de la délivrance du brevet: **20.06.2007**
(21) Numéro de dépôt: 02787140.9
(22) Date de dépôt: 02.07.2002
(51) Int. Cl.: H04L 29/06

(54) **PROCEDE DE DIFFUSION D'UN CONTENU VERS DES TERMINAUX RECEPTEURS ET SERVEUR DE COLLECTE**
VERFAHREN ZUR VERBREITUNG VON INHALT EIN ERFASSUNGSSERVER UND EMPFÄNGER
METHOD OF DELIVERING CONTENT FROM A SOURCE (S) TO DESTINATION TERMINALS (TI) AND THE ASSOCIATED DATA FLOW, SYSTEM, DESTINATION TERMINAL AND COLLECTION SERVER

(30) Priorité: 13.07.2001 FR 0109438
(43) Date de publication de la demande: 26.05.2004
(73) Titulaire: FRANCE TELECOM, 75015 Paris (FR)
(72) Inventeur: BERTIN, Christian, F-35000 Rennes (FR)
(86) Numéro de dépôt international: PCT/FR2002/002293
(87) Numéro de publication internationale: WO 2003/009530

(56) Documents cités:
- US-A- 6 108 782
- BUSSE I ET AL: "Dynamic QoS control of multimedia applications based on RTP" , COMPUTER COMMUNICATIONS, ELSEVIER SCIENCE PUBLISHERS BV, AMSTERDAM, NL, VOL. 19, NR. 1, PAGE(S) 49-58 XP004032389 ISSN: 0140-3664 alinéa [02.2] le document en entier
- BOLOT J-C ET AL: "SCALABLE FEEDBACK CONTROL FOR MULTICAST VIDEO DISTRIBUTION IN THE INTERNET" , COMPUTER COMMUNICATIONS REVIEW, ASSOCIATION FOR COMPUTING MACHINERY. NEW YORK, US, VOL. 24, NR. 4, PAGE(S) 58-67 XP000477042 ISSN: 0146-4833 alinéas [03.1],[],[03.2] le document en entier
- SCHULZRINNE H ET AL: "RTP: A Transport Protocol for Real-Time Applications" XP002122581 le document en entier
- HANDLEY M ET AL: "SDP: Session Description Protocol" XP002101463 le document en entier

## Description

La présente invention concerne un procédé de diffusion d'un contenu en temps réel à partir d'une source vers une pluralité de terminaux récepteurs, à travers un réseau informatique, par exemple l'Internet.

L'Internet permet aujourd'hui de diffuser en temps réel des contenus multimédias, tels que des émissions de télévision, des films vidéo, des conférences et autres programmes, vers une large audience de terminaux récepteurs. Il existe principalement deux méthodes pour diffuser en temps réel des données depuis une source vers une pluralité de terminaux récepteurs, à travers l'Internet.

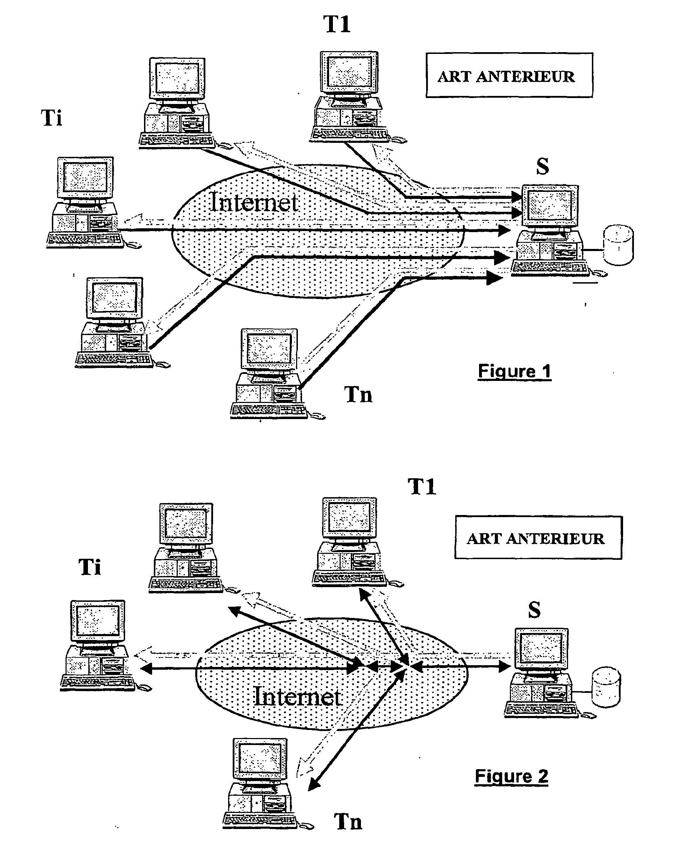

En référence à la figure 1, la première méthode, dite "unicast", consiste à envoyer le même contenu autant de fois qu'il y a de terminaux récepteurs T1,..., Ti, ..., Tn. La source S établit une liaison point-à-point avec chacun des terminaux récepteurs, décompose le contenu à diffuser en paquets de données IP, encore appelés "datagrammes", duplique chaque datagramme IP en n exemplaires, n étant égal au nombre de terminaux récepteurs Ti, et envoie ces n exemplaires vers les n terminaux récepteurs T1, ... , Ti, ... , Tn respectivement.

En référence à la figure 2, la seconde méthode, dite "multicast", permet à la source S de diffuser un contenu multimédia vers une pluralité de terminaux récepteurs T1,..., Ti, ..., Tn, en un seul envoi. Lors de la diffusion du contenu, la source S émet des datagrammes IP, lesquels sont dupliqués en cascade par des noeuds du réseau, que l'on appellera par la suite des "routeurs", afin d'être acheminés jusqu'aux terminaux récepteurs T1,..., Ti, ..., Tn. Si aucun terminal Ti ne demande à recevoir les paquets de données émis par la source, ces derniers ne sont pas acheminés au-delà du premier noeud du réseau et sont donc perdus. Lorsqu'un terminal Ti souhaite recevoir le contenu multimédia diffusé par la source S, il envoie une requête d'acquisition de ce contenu en direction de la source S, à travers l'Internet, en utilisant le protocole IGMP (Internet Group Management Protocol). Le premier routeur multicast, recevant déjà les datagrammes IP diffusés par la source et qui reçoit cette requête, se charge de dupliquer les datagrammes IP puis les achemine vers le terminal Ti ou vers un autre routeur. Par "routeur multicast", on entend désigner un noeud du réseau qui reçoit les datagrammes diffusés par la source et les achemine vers un ou plusieurs terminaux, après les avoir éventuellement dupliqués.

Pour recevoir un contenu diffusé par une source, en mode unicast ou multicast, chaque terminal récepteur doit au préalable récupérer un fichier descriptif SDP (Session Description Protocol) associé à la source, par exemple par téléchargement depuis un site Web. La structure du fichier SDP, définie par l'IETF (Internet Engineering Task Force), est décrite dans le document RFC2327. Ce fichier est destiné à véhiculer les informations requises pour permettre aux terminaux récepteurs de recevoir les contenus multimédias diffusés par la source. A chaque source correspond un fichier SDP général, contenant toutes les informations utiles pour se mettre en réception de cette source, quel que soit le contenu diffusé par celle-ci. En outre, à chaque contenu diffusé (émission TV, film, conférence, etc.) par la source correspond un fichier SDP spécifique contenant toutes les informations requises pour recevoir ce contenu particulier. Le fichier SDP général de la source est valable quel que soit le contenu diffusé par la source, alors que le fichier SDP d'un contenu spécifique n'est valable que pour la diffusion de ce contenu.

Le protocole de transmission de données essentiellement utilisé pour la diffusion en temps réel, en mode unicast ou multicast, à travers l'Internet est le protocole RTP (Real-time Transfer Protocol). Il est généralement associé au protocole RTCP (Real-time Transfer Control Protocol) de contrôle des flux de données qui permet aux terminaux récepteurs de faire remonter vers la source des rapports de réception contenant des informations QoS (Quality of Service) sur la qualité de la réception, telles que l'indication du débit de réception et le taux de perte de datagrammes. Selon le protocole RTP, pour diffuser un contenu multimédia, la source émet une pluralité de flux de données, chaque flux véhiculant les données correspondant à un média spécifique. A titre d'exemple, pour diffuser un film vidéo en deux langues, la source émet un flux vidéo et deux flux audios pour les deux langues respectivement. En outre, les données d'un même média, par exemple vidéo ou audio, peuvent être véhiculées par plusieurs flux ayant des débits de données différents. A titre d'exemple, pour diffuser la composante vidéo d'un contenu audiovisuel, la source peut émettre trois flux vidéos, à 400kbit/s chacun, dont un flux vidéo de base Vb, un premier flux vidéo de rehaussement Ve1 (Video enhancement 1) et un second flux vidéo de rehaussement Ve2 (Video enhancement 2). En réception, suivant leurs capacités, les terminaux récepteurs utilisent le flux vidéo de base en y ajoutant éventuellement le flux vidéo Ve1 et/ou le flux vidéo Ve2 afin d'obtenir une meilleure qualité vidéo. En variante, la source peut émettre trois flux vidéos à 400kbit/s, 800kbit/s et 1200kbit/s respectivement, les terminaux récepteurs sélectionnant l'un seul de ces trois flux suivant leurs capacités. Pour recevoir un contenu multimédia véhiculé par n flux, les terminaux récepteurs utilisent n paires de ports de communication, chaque paire comprenant un port RTP et un port RTCP, pour recevoir les n flux et émettre les n rapports de réception correspondant à ces n flux. Les ports de communication RTP et RTCP associés d'une même paire se suivent, le port RTP étant pair et le port RTCP impair.

En unicast, la source établit autant de liaisons point-à-point qu'il y a de terminaux récepteurs. On peut donc sans difficulté mesurer l'audience de la source en temps réel en dénombrant les liaisons point-à-point établies. Cependant, la technique unicast est gourmande en bande passante et donc inadaptée à la diffusion vers un large public. Le document BUSSE, ET AL " Dynamic QoS Control of multimedia applications based on RTP" décrit un procédé de diffusion en temps réel d'un contenu à partir d'une source de diffusion vers une pluralité de terminaux récépteurs.

La technique multicast permet de réduire considérablement la consommation en bande passante. Cependant, elle ne permet pas de mesurer l'audience de la source de façon simple. En effet, la source émet son contenu audiovisuel en un seul envoi, sans pouvoir dénombrer les terminaux en réception.

Le problème technique posé par la présente invention consiste donc à proposer un procédé de diffusion en temps réel d'un contenu à partir d'une source vers une pluralité de terminaux récepteurs, à travers un réseau informatique, dans lequel chaque terminal récupère des données descriptives associées à la source, la source diffuse le contenu à travers le réseau et les terminaux récepteurs acquièrent le contenu diffusé, à partir desdites données descriptives, qui permette de mesurer l'audience de la source.

Le problème est résolu par le fait qu'on insère dans lesdites données descriptives l'adresse d'un serveur de collecte et chaque terminal récepteur signale qu'il est en réception de la source de diffusion par l'envoi d'un rapport d'audience à ladite adresse.

La présente invention tire son origine d'un problème de diffusion en multicast. Toutefois, la demanderesse entend ne pas limiter la portée de sa demande à cet exemple particulier mais l'étendre à tout type de diffusion, et notamment à la diffusion en unicast.

Dans l'art antérieur, le protocole RTCP permettait de faire remonter des informations vers la source. La solution immédiate au problème de l'invention était donc d'utiliser ce protocole pour mesurer l'audience en multicast. La demanderesse a cependant cherché une solution moins immédiate mais plus satisfaisante. En séparant la source et le collecteur de rapports d'audience, on s'affranchit des inconvénients du protocole RTCP qui, du fait qu'il est intimement lié au protocole RTP, fait remonter une quantité considérable d'informations vers la source, surtout dans le cas de la diffusion de contenus véhiculés par une pluralité de flux, et on mesure de façon simple l'audience. La solution de la présente invention présente l'avantage supplémentaire de ne pas surcharger la source par des remontées de rapports d'audience. La source peut ainsi exploiter toutes ses capacités exclusivement pour la diffusion. En outre, l'adresse étant insérée dans les données descriptives associées à la source, le terminal récepteur la récupère sans effectuer d'action spécifique et sans équipement supplémentaire.

Avantageusement, on insère dans lesdites données descriptives une information de périodicité de façon à ce que chaque terminal récepteur envoie périodiquement au serveur de collecte un rapport d'audience indiquant qu'il est en réception de la source de diffusion.

Dans un mode de réalisation particulier, le terminal insère dans le rapport d'audience au moins l'une des informations du groupe contenant une indication géographique de localisation, une langue préférée et une information de qualité de réception. Grâce à cela, on peut dresser les profils des terminaux récepteurs, autrement dit connaître leurs caractéristiques de récepteurs. La connaissance de ces profils permettra à un centre de programmation d'adapter la grille de programmation de la source afin de cibler de façon plus fine les terminaux récepteurs, en fonction de leurs profils.

De préférence, le serveur de collecte attribue une information d'horodatage à chaque rapport d'audience reçu. Ainsi tous les rapports d'audience sont horodatés par la même horloge.

Avantageusement, le serveur de collecte élabore un bilan concernant l'audience de la source de diffusion, indiquant le nombre de terminaux en réception de la source de diffusion, à partir des rapports d'audience des terminaux. En d'autres termes, le serveur de collecte mesure l'audience de la source de diffusion, à l'aidé des rapports d'audience reçus provenant des terminaux en réception de la source de diffusion, et fait ainsi un bilan de cette audience. Le serveur de collecte pourra ensuite transmettre ce bilan au centre de programmation de la source, lequel l'exploitera afin d'adapter la grille de programmation de la source.

De préférence encore, une pluralité de sources diffusant des contenus vers une pluralité de groupes de terminaux récepteurs, l'ensemble des terminaux appartenant aux différents groupes envoient des rapports d'audience vers le même serveur de collecte. Le serveur de collecte peut ainsi servir de centre d'audiométrie pour plusieurs sources.

On peut insérer les données descriptives associées à la source dans un fichier SDP.

On peut aussi diffuser l'adresse du serveur de collecte à travers un canal de signalisation associé à la source.

L'invention concerne encore un terminal récepteur pour la mise en oeuvre du procédé précédemment défini, caractérisé par le fait qu'il est agencé pour récupérer des données descriptives associées à une source de diffusion, lesdites données contenant une adresse d'un serveur de collecte, et pour émettre au moins un rapport d'audience indiquant qu'il est en réception de ladite source de diffusion vers l'adresse dudit serveur de collecte.

L'invention concerne aussi un système pour la mise en oeuvre du procédé précédemment défini comprenant
- une source de diffusion destinée à diffuser un contenu à travers un réseau,
- un serveur de collecte et
- des terminaux récepteurs destinés à récupérer des données descriptives associées à la source de diffusion, lesdites données descriptives contenant une adresse du serveur de collecte, à acquérir le contenu diffusé par la source de diffusion à partir des données descriptives et à émettre des rapports d'audience indiquant que les terminaux sont en réception de ladite source de diffusion vers l'adresse du serveur de collecte,
ledit serveur de collecte étant destiné à élaborer un bilan sur l'audience de ladite source de diffusion à partir des rapports d'audience reçus, le bilan sur l'audience de la source de diffusion indiquant le nombre de terminaux en réception de ladite source de diffusion.

L'invention concerne enfin un flux de données pour la mise en oeuvre du procédé précédemment défini, contenant des données descriptives relatives à un contenu et/ou à une source de diffusion de contenus, à partir desquelles un terminal peut se mettre en réception d'un contenu diffusé par la source de diffusion, caractérisé par le fait que lesdites données descriptives contiennent une adresse d'un serveur de collecte de façon à ce que le terminal envoie un rapport d'audience indiquant qu'il est en réception de la source de diffusion vers l'adresse du serveur de collecte.

La présente invention sera mieux comprise à l'aide de la description suivante d'un mode de réalisation particulier du procédé de diffusion et d'une forme de réalisation particulière du serveur de collecte de l'invention, en référence au dessin annexé sur lequel:
- la figure 3 représente une vue schématique d'une pluralité de terminaux récepteurs, d'une source de diffusion, d'un centre de programmation et d'un serveur de collecte;
- la figure 4 représente une vue schématique de l'un des terminaux récepteurs, de la source de diffusion et du serveur de collecte de la figure 3, d'un site Web, et les différentes étapes du procédé de diffusion selon le mode de réalisation particulier de l'invention;
- les figures 5 à 7 représentent des organigrammes du procédé de diffusion selon le mode de réalisation particulier de l'invention et

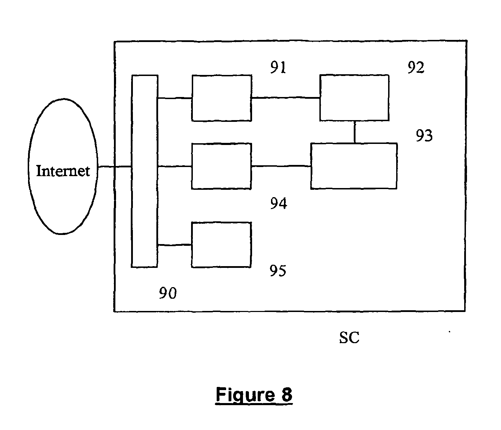

- la figure 8 représente un schéma bloc fonctionnel du serveur de collecte de la figure 3.

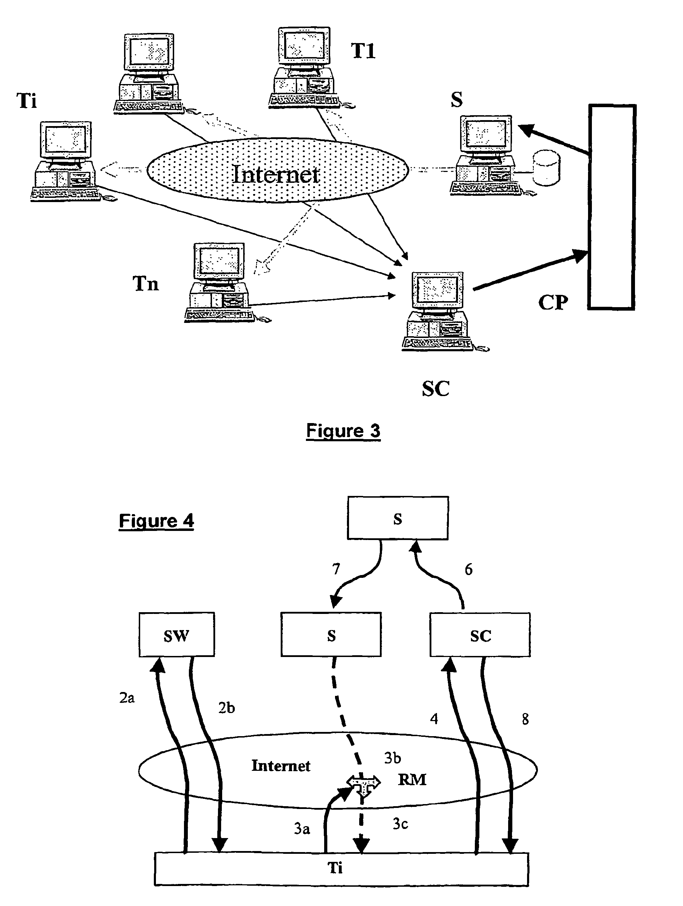

Sur la figure 3, on a représenté un réseau informatique, en l'espèce l'internet, et un système comprenant une pluralité de terminaux T1, T2,...,Ti,..., Tn, une source de diffusion S, un centre de programmation CP et un serveur de collecte SC. Dans l'exemple particulier de la description, la source de diffusion S est une chaîne de diffusion audiovisuelle, que l'on appellera par la suite "chaîne 1", hébergée par un serveur audiovisuel de l'Internet et destinée à diffuser en mode multicast des contenus audiovisuels (émissions télévisées, films vidéos, etc.), à travers l'internet, vers des terminaux récepteurs. Le serveur audiovisuel pourrait héberger d'autres sources de diffusion.

Le centre de programmation CP est destiné à établir une grille de programmation pour la diffusion des contenus audiovisuels par la source S et à créer, pour la source S, un fichier descriptif SDP général, contenant toutes les informations nécessaires pour permettre à un terminal de se mettre en réception de la source S, ainsi que, pour chaque contenu diffusé, un fichier descriptif SDP spécifique contenant toutes les informations requises pour recevoir ce contenu. Les fichiers descriptifs SDP, associés à la source S, sont transmis au site Web SW à partir duquel ils peuvent être téléchargés par des terminaux.

On notera ici que la structure d'un fichier SDP, telle que définie par l'IETF, est la suivante:
Session description
   v= (protocol version)
   o= (owner/creator and session identifier).
   s= (session name)
   i=* (session information)
   u=* (URI of description)
   e=* (email address)
   p=* (phone number)
   c=* (connection information - not required if included in all media)
   b=* (bandwidth information)
   One or more time descriptions (see below)
   z=* (time zone adjustments)
   k=* (encryption key)
   a=* (zero or more session attribute lines)
   Zero or more media descriptions (see below)
Time description
   t= (time the session is active)
   r=* (zéro or more repeat times)
Média description
   m= (media name and transport address)
   i=* (media title)
   c=* (connection information - optional if included at session-level)
   b=* (bandwidth information)
   k=* (encryption key)
   a=* (zero or more media attribute lines)

Les champs marqués du caractère "*" sont optionnels.

Pour plus d'informations concernant la structure de données SDP, le lecteur est invité à se reporter au document RFC2327 issu de l'IETF.

Le serveur de collecte SC, connecté à l'Internet, est destiné à recueillir des rapports d'audience concernant une source de diffusion S, provenant de terminaux récepteurs Ti et indiquant que ces terminaux sont en réception de cette source S. Il comprend une interface 90 de connexion à l'Internet, un bloc 91 de réception des rapports, un bloc 92 d'horodatage des rapports, un bloc de traitement 93, un bloc 94 d'émission de ce bilan vers la source S et un bloc 95 de modification de la période d'envoi des rapports. Tous ces éléments sont reliés à une unité centrale de commande, non représentée, destinée à commander le fonctionnement du serveur SC. Les blocs 91, 94 et 95 sont reliés à l'interface de connexion 90. Le bloc d'horodatage 92, interposé entre le bloc de réception 91 et le bloc de traitement 93, est destiné à horodater les rapports reçus. Le bloc de traitement 93, connecté au bloc d'émission 94, est destiné à mesurer l'audience de la source de diffusion S et à élaborer un bilan statistique concernant cette audience de la source de diffusion S, à partir des rapports d'audience des terminaux récepteurs Ti. Ce bilan d'audience comprend des histogrammes indiquant le nombre de terminaux en réception de la source de diffusion S suivant différents paramètres (par exemple l'heure de réception, la langue de réception, le lieu de réception, etc.).

Chaque terminal récepteur Ti comprend un module de connexion à l'Internet, un navigateur Internet, un module récepteur multicast, une interface homme-machine et une unité centrale de commande, à laquelle sont connectés tous les éléments du terminal et destinée à commander le fonctionnement de celui-ci. L'interface homme-machine comprend un écran de visualisation, des moyens de saisie (clavier et souris) ainsi qu'un haut-parleur. Le module récepteur multicast est agencé pour se mettre en réception d'une source de diffusion S à travers l'Internet et, pendant la réception, envoyer des rapports d'audience indiquant notamment que le terminal Ti est réception de la source S vers le serveur de collecte SC. En fonctionnement, afin de se mettre en réception d'une source de diffusion S, le module récepteur, en coopération avec le module de connexion à l'Internet et le navigateur Internet, récupère des données descriptives, en l'espèce un fichier SDP, associées à la source de diffusion S, ici par téléchargement depuis le site Web SW. A l'aide des informations contenues dans le fichier SDP, le module récepteur se met en réception de la source S, autrement dit acquiert le contenu diffusé par celle-ci, et, envoie parallèlement à travers l'Internet, ici de façon périodique, des rapports d'audience indiquant notamment que le terminal Ti est en réception de la source de diffusion S vers l'adresse du serveur de collecte SC, extraite du fichier SDP.

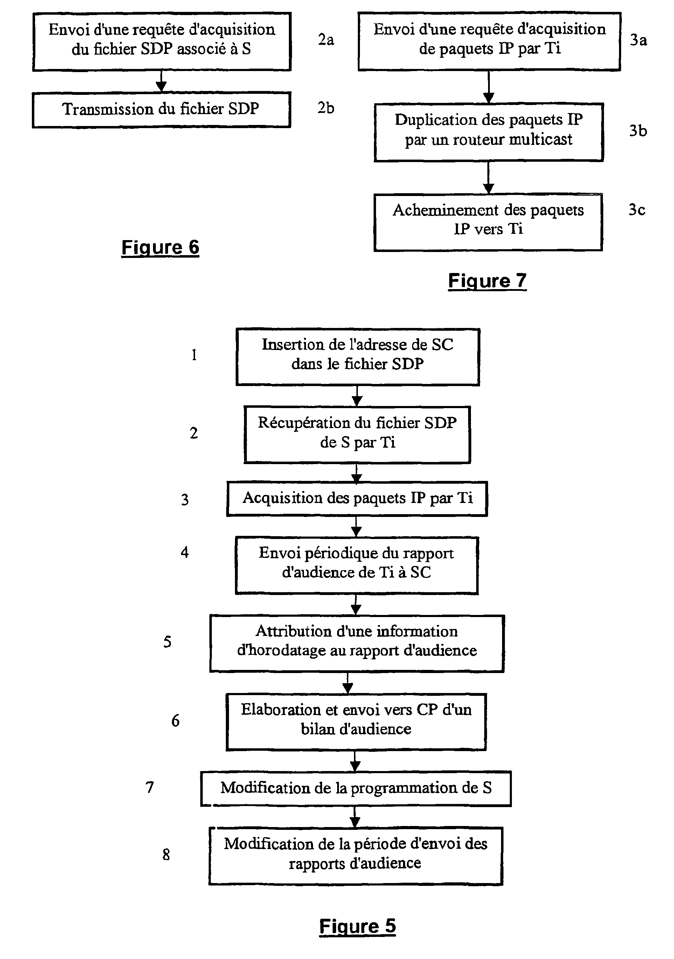

En référence aux figures 4 à 7, on va maintenant décrire le procédé de diffusion en temps réel d'un contenu audiovisuel, à partir de la source S, vers une pluralité de terminaux Ti, à travers l'Internet, en mode multicast. Dans l'exemple particulier de la description, le contenu diffusé est un film vidéo intitulé "la grande vadrouille".

Dans une étape 1, le centre de programmation CP insère un champ, ici intitulé "d", associé au serveur de collecte SC, dans le fichier SDP spécifique du contenu à diffuser, à savoir le film "la grande vadrouille", ainsi que dans le fichier SDP général de la source S. Le champ "d", représenté ci-après, contient toutes les informations requises pour permettre à un terminal récepteur Ti d'envoyer périodiquement un rapport d'audience au serveur de collecte SC.

### Champ d

d= <network type><address type><connection address><port><time period>

Le champ "d", lequel constitue en définitive une commande d'envoi de rapports d'audience vers le serveur SC, contient l'indication du réseau auquel appartient le serveur SC, le type de l'adresse du serveur SC, l'adresse du serveur SC, le numéro du port de communication du serveur SC et la période τ d'envoi des rapports vers le serveur SC.

Le fichier SDP de la source et le fichier SDP du film sont transmis au site SW et peuvent être téléchargés depuis ce site par des terminaux.

A titre d'exemple, le fichier SDP du film "la grande vadrouille", diffusé par la chaîne 1, contient les informations suivantes:
v=0
o=chaine1 IN IP4 126.16.64.4
s=La grande vadrouille
u=http://www.chaine1.fr/films/la_grande_vadrouille.htm
e=infos@chaine1.fr
c=IN IP4 224.2.17.12/127
t=2873397496 2873404696
a=recvonly
m=audio 49170 RTP/AVP 0
m=video 51372 RTP/AVP 31
m=application 32416 udp wb
d=IN IP4 224.2.1.1 32416 300

Le champ "d" indique que:
- le serveur SC appartient à l'Internet;
- l'adresse du serveur SC est de type IP4;
- l'adresse IP du serveur SC est 224.2.1.1;
- le numéro du port de communication du serveur SC est 32416 et
- la période τ d'envoi des rapports d'audience est égale à 300 secondes.

Dans une étape 2, chaque terminal Ti souhaitant recevoir le film récupère un flux de données descriptives associées à la source de diffusion S, véhiculant le fichier SDP spécifique associé au film considéré ou le fichier SDP général de la source S. On rappelle ici que le fichier SDP du film n'est valable que pour la diffusion du film considéré, alors que le fichier SDP de la source permet de se mettre en réception de la source à tout moment, quel que soit le contenu diffusé par celle-ci. Pour recevoir le flux de données descriptives véhiculant l'un de ces deux fichiers SDP, dans une étape 2a, le terminal se connecte au site Web SW et lui adresse une requête d'acquisition du fichier considéré. Sur réception de cette requête, dans une étape 2b, le site Web SW transmet le fichier requis au terminal Ti, qui le mémorise.

La source. S diffuse le film vidéo en mode multicast, à travers l'Internet. Pour cela, elle émet des paquets de données IP, véhiculant le contenu audiovisuel, en un seul envoi, à travers l'Internet, vers une pluralité de terminaux récepteurs.

Dans une étape 3, à partir des informations contenues dans le fichier SDP reçu, chaque terminal Ti souhaitant recevoir le film acquiert les paquets de données IP diffusés par la source S à travers l'Internet. L'étape 3 se décompose en plusieurs sous-étapes:
- le terminal Ti envoie une requête d'acquisition du contenu audiovisuel diffusé par la source S, à savoir le film vidéo "la grande vadrouille", en direction de la source S, à travers l'Internet, par le protocole IGMP, (étape 3a)
- le premier routeur multicast RM qui reçoit cette requête duplique les paquets IP reçus provenant de la source (étape 3b) puis
- il achemine les paquets IP dupliqués vers le terminal Ti, à travers l'Internet (étape 3c).

On rappelle ici que par "routeur multicast", on entend désigner un noeud du réseau qui reçoit les paquets IP diffusés par la source et les achemine vers un ou plusieurs terminaux, après les avoir éventuellement dupliqués, si nécessaire.

Dans une étape 4, sur réception du premier paquet de données IP diffusé par la source S, le terminal Ti envoie un rapport d'audience au serveur de collecte SC, à travers l'Internet. Ce premier rapport signale au serveur SC que le terminal Ti vient de se mettre en réception de la source S. Il contient des informations relatives au terminal récepteur Ti, en l'espèce une indication géographique de localisation du terminal Ti, la langue préférée du terminal Ti, le débit de réception du terminal Ti et le taux de perte de paquets IP reçus. Le terminal Ti réitère l'étape 4 périodiquement, à la fréquence 1/τ, afin de signaler au serveur SC qu'il est en réception de la source S, jusqu'à ce qu'il interrompe la réception des paquets IP diffusés par la source S. Avant d'interrompre la réception, s'il en a la possibilité, le terminal Ti envoie un dernier rapport d'audience signalant au serveur SC qu'il va cesser de recevoir.

Le serveur SC reçoit les rapports d'audience provenant de tous les terminaux Ti du groupe multicast de terminaux en réception de la source de diffusion S et attribue à chaque rapport reçu une information d'horodatage, contenant la date et l'heure de réception de ce rapport, dans une étape 5. Par "groupe multicast", on entend désigner l'ensemble des terminaux en réception d'une source de diffusion multicast donnée.

Dans une étape 6, à partir des rapports d'audience reçus, provenant des terminaux Ti en réception de la source de diffusion S, le serveur SC élabore un bilan statistique concernant l'audience de cette source de diffusion S. Le bilan d'audience contient un histogramme d'audience, sur lequel figure, en ordonnées, le nombre de terminaux en réception de la source de diffusion S et, en abscisses, l'heure et la date de réception, ainsi que divers histogrammes concernant la langue préférée, la qualité de la réception et la localisation des terminaux en réception de la source de diffusion S. Il transmet ensuite ce bilan d'audience relatif à la source S au centre de programmation CP.

Dans une étape 7, en tenant compte du bilan d'audience, le centre de programmation CP modifie la grille de programmation de la source S afin de l'adapter aux profils audiovisuels des terminaux récepteurs Ti. Ainsi, le centre CP peut changer les plages horaires de diffusion de certains contenus audiovisuels, par exemple de publicités, en ciblant de façon plus précise l'audience susceptible d'être intéressée par ces contenus.

Dans une étape 8, afin de diminuer le nombre de rapports reçus, le serveur SC transmet aux terminaux Ti une commande de modification de la période d'envoi des rapports d'audience, avec l'indication d'une nouvelle période τ' supérieure à la période τ. Sur réception de cette commande, chaque terminal Ti remplace l'ancienne période τ par la nouvelle période τ' en mémoire. De la même manière, le serveur SC pourrait diminuer la période d'envoi des rapports d'audience afin de recueillir davantage de rapports.

Le serveur de collecte SC peut être utilisé par une pluralité de sources de diffusion S. Dans ce cas, les différentes sources S diffusant des contenus vers différents groupes multicast de terminaux récepteurs respectivement, l'ensemble des terminaux récepteurs appartenant aux différents groupes multicast font remonter leurs rapports d'audience vers le même serveur de collecte SC. Celui-ci élabore ensuite différents bilans d'audience individualisés concernant les différentes sources de diffusion respectivement. En d'autres termes, le serveur de collecte élabore un bilan d'audience pour chacune des sources de diffusion S. Il transmet ensuite le bilan d'audience relatif à chaque source de diffusion S vers le centre de programmation CP dont dépend cette source de diffusion S.

Dans la description qui précède, on insère les données descriptives associées à la source S dans un fichier SDP et les terminaux récepteurs Ti récupèrent ce fichier SDP par téléchargement depuis un site Web SW. Les terminaux pourraient récupérer les données descriptives associées à la source par tout autre moyen. On pourrait par exemple insérer ces données descriptives dans un courrier électronique, ou "mail", envoyé au terminal Ti.

Dans une autre variante de réalisation de l'invention, on diffuse les caractéristiques du serveur de collecte à travers un canal de signalisation associé à la source. Dans ce cas, lorsqu'un terminal souhaite recevoir le contenu diffusé par la source de diffusion, il récupère au préalable les informations utiles pour recevoir le canal de signalisation associé à la source, par exemple par téléchargement depuis un site Web, puis se met en réception de ce canal de signalisation afin d'acquérir les données descriptives associées à la source, contenant des informations utiles pour se mettre en réception de cette source ainsi que les caractéristiques du serveur de collecte contenues dans le champ "q" précédemment décrit.

Le fichier descriptif contenant toutes les informations requises pour se mettre en réception de la source pourrait avoir un format autre que le format SDP, par exemple le format XML.

L'invention pourrait s'appliquer à la diffusion d'un contenu multimédia autre qu'audiovisuel, à travers un réseau informatique autre que l'Internet. Elle pourrait également s'appliquer à la diffusion en unicast.

## Revendications

1. Procédé de diffusion en temps réel d'un contenu à partir d'une source de diffusion (S) vers une pluralité de terminaux récepteurs (Ti), à travers un réseau informatique, dans lequel chaque terminal (Ti) récupère des données descriptives associées à la source (S), la source (S) diffuse le contenu à travers le réseau et les terminaux récepteurs (Ti) acquièrent le contenu diffusé, à partir desdites données descriptives, procédé **caractérisé par le fait que** lesdites données descriptives comprennent une adresse d'un serveur de collecte (SC) et, à partir desdites données descriptives, chaque terminal (Ti) signale qu'il est en réception de la source de diffusion (S) par l'envoi d'un rapport d'audience à ladite adresse.

2. Procédé selon la revendication 1, dans lequel dans lesdites données descriptives comprennent une information de périodicité de façon à ce que chaque terminal récepteur (Ti) envoie périodiquement au serveur de collecte (SC) un rapport d'audience indiquant qu'il est en réception de la source de diffusion (S).

3. Procédé selon l'une des revendications 1 et 2, dans lequel chaque terminal (Ti) insère dans le rapport d'audience au moins l'une des informations du groupe contenant une indication géographique de localisation, une langue préférée et une information de qualité de réception.

4. Procédé selon l'une des revendications 1 à 3, dans lequel le serveur de collecte (SC) attribue une information d'horodatage à chaque rapport d'audience reçu.

5. Procédé selon l'une des revendications 1 à 4, dans lequel le serveur de collecte (SC) élabore un bilan concernant l'audience de la source de diffusion (S), indiquant le nombre de terminaux en réception de la source de diffusion (S), à partir des rapports d'audience des terminaux (Ti).

6. Procédé selon l'une des revendications 1 à 5, dans lequel, une pluralité de sources diffusant des contenus vers une pluralité de groupes de terminaux récepteurs (Ti), l'ensemble des terminaux appartenant aux différents groupes envoient des rapports d'audience vers le même serveur de collecte (SC).

7. Procédé selon l'une des revendications 1 à 6, dans lequel on insère également dans lesdites données descriptives au moins l'une des informations du groupe contenant l'indication du réseau du serveur de collecte (SC), le type d'adresse du serveur de collecte (SC) et l'indication d'un port de réception des rapports.

8. Procédé selon l'une des revendications 1 à 7, dans lequel le serveur de collecte (SC) transmet aux terminaux récepteurs (Ti) une nouvelle information de périodicité afin de modifier la périodicité d'envoi des rapports d'audience.

9. Procédé selon l'une des revendications 1 à 8, dans lequel on insère les données descriptives associées à la source dans un fichier SDP.

10. Procédé selon l'une des revendications 1 à 9, dans lequel on diffuse l'adresse du serveur de collecte à travers un canal de signalisation associé à la source.

11. Terminal récepteur pour la mise en oeuvre du procédé de la revendication 1, **caractérisé par le fait qu'**il est agencé pour récupérer des données descriptives associées à une source de diffusion (S), lesdites données contenant une adresse d'un serveur de collecte (SC), et pour émettre au moins un rapport d'audience indiquant qu'il est en réception de ladite source de diffusion (S) vers l'adresse dudit serveur de collecte (SC).

12. Terminal selon la revendication 11, **caractérisé par le fait qu'**il est agencé pour émettre périodiquement une pluralité de rapports d'audience vers l'adresse du serveur de collecte (SC).

13. Système pour la mise en oeuvre du procédé de la revendication 1, comprenant
- une source de diffusion (S) destinée à diffuser un contenu à travers un réseau,
- un serveur de collecte (SC) et
- des terminaux récepteurs (Ti) destinés à récupérer des données descriptives associées à la source de diffusion (S), lesdites données descriptives contenant une adresse du serveur de collecte (SC), à acquérir le contenu diffusé par la source de diffusion (S) à partir des données descriptives et à émettre des rapports d'audience indiquant que les terminaux sont en réception de ladite source de diffusion (S) vers l'adresse du serveur de collecte (SC),
ledit serveur de collecte (SC) étant destiné à élaborer un bilan sur l'audience de ladite source de diffusion à partir des rapports d'audience reçus, le bilan sur l'audience de la source de diffusion (S) indiquant le nombre de terminaux (Ti) en réception de ladite source de diffusion (S).

14. Système selon la revendication 13, dans lequel les terminaux récepteurs (Ti) étant destinés à envoyer périodiquement des rapports d'audience au serveur de collecte (SC), ledit serveur de collecte (SC) comprend des moyens (95) pour modifier la périodicité d'envoi des rapports d'audience.

15. Flux de données pour la mise en oeuvre du procédé de la revendication 1, contenant des données descriptives relatives à un contenu et/ou à une source (S) de diffusion de contenus, à partir desquelles un terminal (Ti) peut se mettre en réception d'un contenu diffusé par la source de diffusion (S), **caractérisé par le fait que** lesdites données descriptives contiennent une adresse d'un serveur de collecte de façon à ce que le terminal (Ti) envoie un rapport d'audience indiquant qu'il est en réception de la source de diffusion (S) vers l'adresse du serveur de collecte (SC).

16. Flux de données selon la revendication 15, **caractérisé par le fait qu'**il contient également au moins l'une des informations du groupe comprenant l'indication du réseau auquel appartient le serveur de collecte (SC), le type de l'adresse du serveur de collecte (SC), le numéro d'un port de communication du serveur de collecte (SC) et une période d'envoi de rapports d'audience vers le serveur de collecte (SC).

17. Flux de données selon l'une des revendications 15 et 16, dans lequel les données descriptives sont au format SDP.

## Claims

1. Method of broadcasting in real time a content from a broadcasting source (S) to a plurality of receiving terminals (Ti) via a computer network, in which each terminal (Ti) recovers descriptive data associated with the source (S), the source (S) broadcasts the content via the network and the receiving terminals (Ti) acquire the broadcast content, based on said descriptive data, the method being **characterized in that** said descriptive data contain an address of a collection server (SC) and, based on said descriptive data, each terminal (Ti) signals that it is receiving from the broadcasting source (S) by sending an audience report to said address.

2. Method according to Claim 1, in which said descriptive data contain a periodicity indication such that each receiving terminal (Ti) periodically sends to the collection server (SC) an audience report indicating that it is receiving from the broadcasting source (S).

3. Method according to one of Claims 1 and 2, in which each terminal (Ti) inserts into the audience report at least one of the indications of the group containing a geographic location indication, a preferred language and a reception quality indication.

4. Method according to one of Claims 1 to 3, in which the collection server (SC) assigns a datestamp indication to each audience report received.

5. Method according to one of Claims 1 to 4, in which the collection server (SC) creates a balance sheet concerning the audience of the broadcasting source (S), indicating the number of terminals receiving from the broadcasting source (S), based on the audience reports from the terminals (Ti).

6. Method according to one of Claims 1 to 5, in which, a plurality of sources broadcasting contents to a plurality of groups of receiving terminals (Ti), all the terminals belonging to the different groups send audience reports to the same collection server (SC).

7. Method according to one of Claims 1 to 6, in which at least one of the indications of the group containing the indication of the network of the collection server (SC), the type of address of the collection server (SC) and the indication of a port for receiving reports is also inserted into said descriptive data.

8. Method according to one of Claims 1 to 7, in which the collection server (SC) transmits to the receiving terminals (Ti) a new periodicity indication in order to modify periodicity of sending of the audience reports.

9. Method according to one of Claims 1 to 8, in which the descriptive data associated with the source is inserted into an SDP file.

10. Method according to one of Claims 1 to 9, in which the address of the collection server is broadcast via a signalling channel associated with the source.

11. Receiving terminal for implementing the method of Claim 1, **characterized in that** it is arranged to recover descriptive data associated with a broadcasting source (S), said data containing an address of a collection server (SC), and to send at least one audience report indicating that it is receiving from said broadcasting source (S) to the address of said collection server (SC).

12. Terminal according to Claim 11, **characterized in that** it is arranged to periodically send a plurality of audience reports to the address of the collection server (SC).

13. System for implementing the method of Claim 1, comprising
- a broadcasting source (S) designed to broadcast a content via a network,
- a collection server (SC), and
- receiving terminals (Ti) designed to recover descriptive data associated with the broadcasting source (S), said descriptive data containing an address of the collection server (SC), to acquire the content broadcast by the broadcasting source (S) based on the descriptive data and to send audience reports indicating that the terminals are receiving from said broadcasting source (S) to the address of the collection server (SC),
said collection server (SC) being designed to generate a balance sheet on the audience of said broadcasting source based on the audience reports received, the balance sheet on the audience of the broadcasting source (S) indicating the number of terminals (Ti) receiving from said broadcasting source (S).

14. System according to Claim 13, in which the receiving terminals (Ti) being designed to periodically send audience reports to the collection server (SC), said collection server (SC) comprises means (95) for modifying the periodicity of sending of the audience reports.

15. Data flow for implementing the method of Claim 1, containing descriptive data relating to a content and/or a content broadcasting source (S), based on which a terminal (Ti) can set itself to receive a content broadcast by the broadcasting source (S), **characterized in that** said descriptive data contains an address of a collection server in order for the terminal (Ti) to send an audience report indicating that it is receiving from the broadcasting source (S) to the address of the collection server (SC).

16. Data flow according to Claim 15, **characterized in that** it also contains at least one of the indications of the group comprising the indication of the network to which the collection server (SC) belongs, the type of the address of the collection server (SC), the number of a communication port of the collection server (SC) and a period for sending audience reports to the collection server (SC).

17. Data flow according to one of Claims 15 and 16, in which the descriptive data is in SDP format.

## Patentansprüche

1. Verfahren zur Echtzeit-Verbreitung eines Inhalts ausgehend von einer Verbreitungsquelle (S) an mehrere Empfangsterminals (Ti) über ein EDV-Netz, bei dem jedes Terminal (Ti) der Quelle (S) zugeordnete beschreibende Daten empfängt, die Quelle (S) den Inhalt über das Netz verbreitet und die Empfangsterminals (Ti) den verbreiteten Inhalt ausgehend von den beschreibenden Daten erwerben, wobei das Verfahren **dadurch gekennzeichnet ist, dass** die beschreibenden Daten eine Adresse eines Sammelservers (SC) enthalten und jedes Terminal (Ti) ausgehend von den beschreibenden Daten durch das Senden eines Nutzerschaftsberichts an die Adresse anzeigt, dass es im Empfangsbetrieb von der Verbreitungsquelle (S) ist.

2. Verfahren nach Anspruch 1, bei dem die beschreibenden Daten eine Periodizitätsinformation enthalten, damit jedes Empfangsterminal (Ti) periodisch an den Sammelserver (SC) einen Nutzerschaftsbericht sendet, der angibt, dass es im Empfangsbetrieb von der Verbreitungsquelle (S) ist.

3. Verfahren nach einem der Ansprüche 1 und 2, bei dem jedes Terminal (Ti) in den Nutzerschaftsbericht mindestens eine der Informationen der Gruppe einfügt, die eine geographische Standortanzeige, eine bevorzugte Sprache und eine Information über die Empfangsqualität enthält.

4. Verfahren nach einem der Ansprüche 1 bis 3, bei dem der Sammelserver (SC) jedem empfangenen Nutzerschaftsbericht eine Zeit- und Datumsangabeinformation zuordnet.

5. Verfahren nach einem der Ansprüche 1 bis 4, bei dem der Sammelserver (SC) eine Bilanz betreffend die Nutzerschaft der Verbreitungsquelle (S) erarbeitet, die ausgehend von den Nutzerschaftsberichten der Terminals (Ti) die Anzahl von Terminals in Empfangsbetrieb von der Verbreitungsquelle (S) angibt.

6. Verfahren nach einem der Ansprüche 1 bis 5, bei dem, wenn mehrere Quellen Inhalte zu mehreren Gruppen von Empfangsterminals (Ti) verbreiten, alle zu den verschiedenen Gruppen gehörenden Terminals Nutzerschaftsberichte zum gleichen Sammelserver (SC) schicken.

7. Verfahren nach einem der Ansprüche 1 bis 6, bei dem ebenfalls in die beschreibenden Daten mindestens eine der Informationen der Gruppe eingefügt wird, die die Anzeige des Netzes des Sammelservers (SC), den Adressentyp des Sammelservers (SC) und die Angabe eines Empfangs-Ports der Berichte enthält.

8. Verfahren nach einem der Ansprüche 1 bis 7, bei dem der Sammelserver (SC) an die Empfangsterminals (Ti) eine neue Periodizitätsinformation überträgt, um die Sendeperiodizität der Nutzerschaftsberichte zu verändern.

9. Verfahren nach einem der Ansprüche 1 bis 8, bei dem die der Quelle zugeordneten beschreibenden Daten in eine SDP-Datei eingefügt werden.

10. Verfahren nach einem der Ansprüche 1 bis 9, bei dem die Adresse des Sammelservers über einen der Quelle zugeordneten Signalisierungskanal verbreitet wird.

11. Empfangsterminal für die Anwendung des Verfahrens nach Anspruch 1, **dadurch gekennzeichnet, dass** es ausgelegt ist, um einer Verbreitungsquelle (S) zugeordnete beschreibende Daten zu empfangen, wobei die Daten eine Adresse eines Sammelservers (SC) enthalten, und um mindestens einen Nutzerschaftsbericht, der angibt, dass es im Empfangsbetrieb von dieser Verbreitungsquelle (S) ist, an die Adresse des Sammelservers (SC) zu senden.

12. Terminal nach Anspruch 11, **dadurch gekennzeichnet, dass** es ausgelegt ist, um periodisch mehrere Nutzerschaftsberichte an die Adresse des Sammelservers (SC) zu senden.

13. System zur Anwendung des Verfahrens nach Anspruch 1, das aufweist
- eine Verbreitungsquelle (S), die dazu bestimmt ist, einen Inhalt über ein Netz zu verbreiten,
- einen Sammelserver (SC) und
- Empfangsterminals (Ti), die dazu bestimmt sind, der Verbreitungsquelle (S) zugeordnete beschreibende Daten zu empfangen, wobei die beschreibenden Daten eine Adresse des Sammelservers (SC) enthalten, den von der Verbreitungsquelle (S) verbreiteten Inhalt ausgehend von den beschreibenden Daten zu erwerben, und Nutzerschaftsberichte, die angeben, dass die Terminals im Empfangsbetrieb von der Verbreitungsquelle (S) sind, an die Adresse des Sammelservers (SC) zu senden,
wobei der Sammelserver (SC) dazu bestimmt ist, eine Bilanz über die Nutzerschaft der Verbreitungsquelle ausgehend von den empfangenen Nutzerschaftsberichten zu erarbeiten, wobei die Bilanz über die Nutzerschaft der Verbreitungsquelle (S) die Anzahl von Terminals (Ti) angibt, die in Empfangsbetrieb von der Verbreitungsquelle (S) sind.

14. System nach Anspruch 13, bei dem die Empfangsterminals (Ti) dazu bestimmt sind, periodisch Nutzerschaftsberichte an den Sammelserver (SC) zu senden, und der Sammelserver (SC) Mittel (95) aufweist, um die Sendeperiodizität der Nutzerschaftsberichte zu verändern.

15. Datenstrom zur Anwendung des Verfahrens gemäß Anspruch 1, der beschreibende Daten bezüglich eines Inhalts und/oder einer Quelle (S) zur Verbreitung von Inhalten enthält, von denen ausgehend ein Terminal (Ti) sich in den Empfangsbetrieb für einen von der Verbreitungsquelle (S) verbreiteten Inhalt versetzen kann, **dadurch gekennzeichnet, dass** die beschreibenden Daten eine Adresse eines Sammelservers enthalten, damit das Terminal (Ti) einen Nutzerschaftsbericht, der angibt, dass es sich im Empfangsbetrieb von der Verbreitungsquelle (S) befindet, an die Adresse des Sammelservers (SC) sendet.

16. Datenstrom nach Anspruch 15, **dadurch gekennzeichnet, dass** er ebenfalls mindestens eine der Informationen der Gruppe enthält, die die Anzeige des Netzes, zu dem der Sammelserver (SC) gehört, den Typ der Adresse des Sammelservers (SC), die Nummer eines Kommunikationsports des Sammelservers (SC) und eine Periode des Sendens von Nutzerschaftsberichten zum Sammelserver (SC) aufweist.

17. Datenstrom nach einem der Ansprüche 15 und 16, bei dem die beschreibenden Daten im Format SDP sind.
